(19) **Europäisches Patentamt / European Patent Office / Office européen des brevets**

(11) **EP 4 683 208 A1**

(12) **EUROPEAN PATENT APPLICATION**
published in accordance with Art. 153(4) EPC

(43) Date of publication:
**21.01.2026 Bulletin 2026/04**

(21) Application number: **23927617.3**

(22) Date of filing: **08.12.2023**

(51) International Patent Classification (IPC):
*H02P 9/04* (2006.01)     *B60L 1/00* (2006.01)
*B60L 7/14* (2006.01)     *B60L 9/18* (2006.01)
*B60L 50/10* (2019.01)    *E02F 9/00* (2006.01)

(52) Cooperative Patent Classification (CPC):
B60L 1/00; B60L 7/14; B60L 9/18; B60L 50/10;
E02F 9/00; H02P 9/04

(86) International application number:
**PCT/JP2023/044092**

(87) International publication number:
**WO 2024/190012 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2023 JP 2023039601**

(71) Applicant: **Hitachi Construction Machinery Co., Ltd.**
**Tokyo 110-0015 (JP)**

(72) Inventors:
• **MATSUO, Kosuke**
**Tokyo 100-8280 (JP)**

• **KANEKO, Satoru**
**Tokyo 100-8280 (JP)**
• **NISHIHAMA, Kazuo**
**Tokyo 100-8280 (JP)**
• **YOSHIMURA, Masatoshi**
**Tokyo 100-8280 (JP)**
• **ISHIDA, Seiji**
**Tsuchiura-shi, Ibaraki 300-0013 (JP)**
• **WATANABE, Toshihiko**
**Tsuchiura-shi, Ibaraki 300-0013 (JP)**
• **IKEGAMI, Tokuma**
**Tsuchiura-shi, Ibaraki 300-0013 (JP)**

(74) Representative: **MERH-IP Matias Erny Reichl Hoffmann**
**Patentanwälte PartG mbB**
**Paul-Heyse-Straße 29**
**80336 München (DE)**

(54) **ELECTRIC DRIVE SYSTEM**

(57)    An object of the present invention is to provide an electrically driving system capable of maintaining a DC voltage on an auxiliary winding side with a single power converter provided on the side of the auxiliary winding, regardless of the rotational speed of a two-winding induction generator and the magnitude of a load on the auxiliary winding side. To achieve the object, the controller computes a first d-axis current command value for the auxiliary winding on the basis of the first DC voltage and a command value for the first DC voltage, computes a second d-axis current command value for the auxiliary winding on the basis of a rotational speed of the generator and electric power demanded by the accessory, controls the power converter so as to bring a d-axis current value of the auxiliary winding into conformity with the first d-axis current command value in a traction state, and controls the power converter so as to bring the d-axis current value of the auxiliary winding into conformity with the second d-axis current command value in a retarded state or an idling state.

[FIG. 5]

**Description**

Technical Field

The present invention relates to an electrically driving system including a two-winding induction generator.

Background Art

There has been known a system for controlling a rotating machine with a plurality of windings. For example, Patent Document 1 discloses "an accessory battery charging apparatus for a series hybrid vehicle that includes a rotating electric machine mounted on the output shaft of an engine and having a main winding and an accessory winding, electric generation control means for enabling the main winding to generate electric power for driving a travelling motor for the vehicle and/or electric power for charging a main battery by rotating the rotating electric machine with the engine, and accessory charging control means for charging an accessory battery using a voltage induced across the accessory winding when the rotating electric machine is rotating."

Prior Art Document

Patent Document

Patent Document 1: JP-H8-289406-A

Summary of the Invention

Problems to be Solved by the Invention

In an induction generator including a stator that has a main winding and an auxiliary winding (two-winding induction generator), if a d-axis auxiliary winding current (excitation current) is determined depending on a command value for a DC voltage on the main winding while the load (electric power demanded by a main machine) on the main winding side is nearly zero and the two-winding induction generator rotates at a low speed, an excitation amount becomes excessive or deficient depending on the magnitude of the load (electric power demanded by an accessory) on the auxiliary winding side, resulting in poor electric generation efficiency. Further, if the excitation amount becomes deficient, then the DC voltage on the main winding side cannot be maintained, failing to bear the load on the auxiliary winding side.

According to Patent Document 1, where the rotational speed of the rotating electric machine is equal to or lower than a predetermined value, the main winding is supplied with an excitation current in order to strengthen excitation fluxes by a permanent magnet. Thus, since a voltage equal to or higher than a voltage capable of operating a step-down chopper circuit is induced in the accessory winding even when the rotational speed of the rotating electric machine is low, the accessory battery can be charged regardless of the rotational speed of the rotating electric machine. However, inasmuch as an excitation current for the main winding is determined only depending on the rotational speed of the rotating electric machine, there is a possibility that the excitation amount may become deficient when the load (electric power demanded by the accessory) on the auxiliary winding increases.

The present invention has been devised in view of the above problems. It is an object of the present invention to provide an electrically driving system capable of maintaining a DC voltage on an auxiliary winding side with a single power converter provided on the side of the auxiliary winding, regardless of the rotational speed of a two-winding induction generator and the magnitude of a load on the auxiliary winding.

Means for Solving the Problems

In order to achieve the above object, there is provided in accordance with the present invention an electrically driving system including a travelling motor, an accessory, a generator that has a stator including a main winding and an auxiliary winding, a rectifier that is connected to the main winding and converts an alternating-current voltage generated by the main winding to a first direct-current voltage, a travelling inverter that is connected to the rectifier and converts the first direct-current voltage to an alternating-current voltage to be supplied to the travelling motor, a power converter that is connected to the auxiliary winding, controls voltages across the main winding and the auxiliary winding, and converts an alternating-current voltage generated by the auxiliary winding to a second direct-current voltage to be supplied to the accessory, and a controller for controlling the power converter, in which the controller is configured to compute a first d-axis current command value for the auxiliary winding on the basis of the first direct-current voltage and a command value for the first direct-current voltage, compute a second d-axis current command value for the auxiliary winding on the basis of a rotational speed of the generator and electric power demanded by the accessory, control the power converter so as to bring a d-axis current value of the auxiliary winding into conformity with the first d-axis current command value in a traction state where the travelling inverter supplies electric power to the travelling motor, and control the power converter so as to bring the d-axis current value of the auxiliary winding into conformity with the second d-axis current command value in a retarded state where the travelling motor generates regenerative electric power or an idling state where the travelling motor is stopped.

Advantages of the Invention

According to the present invention, it is possible in an electrically driving system including a two-winding induction generator to maintain a DC voltage on an auxiliary winding side with a single power converter provided on the side of the auxiliary winding, regardless of the rotational speed of the two-winding induction generator and the magnitude of a load on the auxiliary winding.

Brief Description of the Drawings

[Fig. 1] Fig. 1 is a view illustrating the configuration of a dump truck according to an embodiment of the present invention.
[Fig. 2] Fig. 2 is a diagram illustrating the configuration of an electrically driving system according to the embodiment of the present invention.
[Fig. 3] Fig. 3 is a side elevational view, combined with an enlarged partial cross-sectional view, illustrating the structure of a two-winding induction generator according to the embodiment of the present invention.
[Fig. 4] Fig. 4 is a functional block diagram of a controller according to the embodiment of the present invention.
[Fig. 5] Fig. 5 is a block diagram illustrating processing details of a current command computing section and a voltage command computing section according to the embodiment of the present invention.
[Fig. 6] Fig. 6 is a block diagram illustrating processing details of a frequency command computing section according to the embodiment of the present invention.
[Fig. 7] Fig. 7 is a block diagram illustrating processing details of a voltage command compensating section according to the embodiment of the present invention.
[Fig. 8] Fig. 8 is a block diagram illustrating a modification of the processing details of the voltage command compensating section according to the embodiment of the present invention.
[Fig. 9] Fig. 9 is a block diagram illustrating processing details of an accessory demanded electric power estimating section according to the embodiment of the present invention.
[Fig. 10] Fig. 10 is a diagram illustrating an example of relationship between accessory demanded electric power, generator rotational speed, and second d-axis auxiliary winding current command value according to the embodiment of the present invention.
[Fig. 11] Fig. 11 is a diagram illustrating chronological changes in parameters of the electrically driving system according to the embodiment of the present invention.

Modes for Carrying Out the Invention

An embodiment of the present invention will be described hereinbelow with reference to the drawings. Identical parts are denoted by identical reference characters throughout views and redundant description will be omitted.

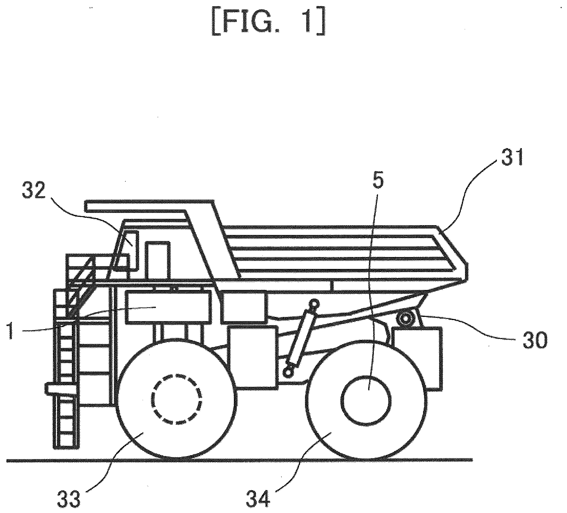

Fig. 1 is a view illustrating the configuration of a dump truck according to an embodiment of the present invention. As illustrated in Fig. 1, the dump truck includes a vehicle body 30, a prime mover 1, a loading platform 31 mounted vertically pivotally on an upper side rear portion of the vehicle body 30, and a cabin 32 disposed on an upper side front portion of the vehicle body 30. A pair of left and right driven wheels 33 are mounted on a lower front side portion of the vehicle body 30, and a pair of left and right drive wheels 34 are mounted on a lower rear side portion of the vehicle body 30. The drive wheels 34 are driven by a travelling motor 5. Providing the dump truck is used at a mine, the dump truck operates by repeating a series of work cycles of loading earth and sand at a loading site, traveling from the loading site to a dumping site, dumping the load at the dumping site, and then traveling from the dumping site back to the loading site.

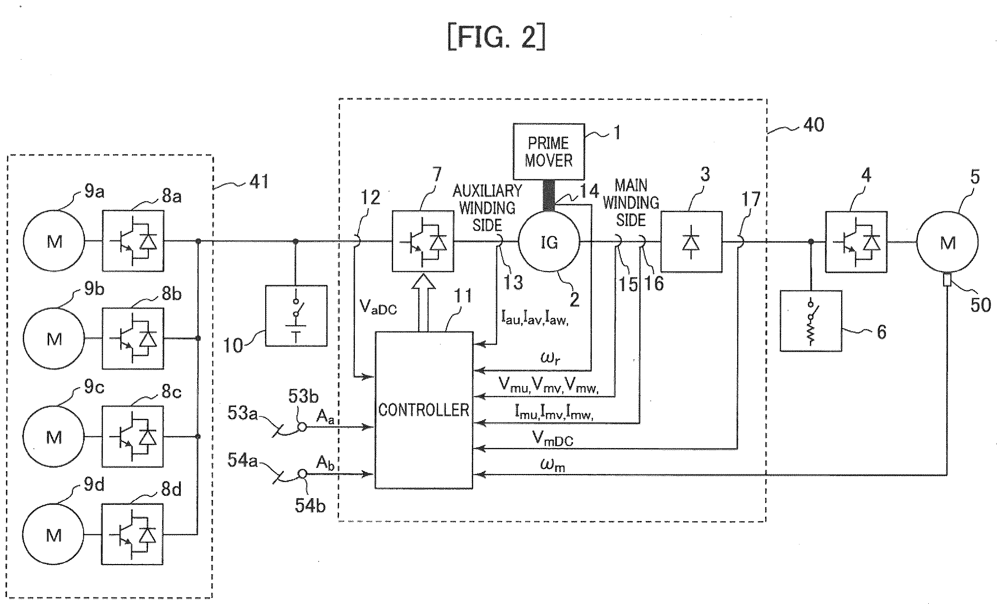

Fig. 2 is a diagram illustrating the configuration of an electrically driving system incorporated in the dump truck illustrated in Fig. 1. As illustrated in Fig. 2, the electrically driving system includes the prime mover 1, a two-winding induction generator 2 including a stator having a main winding and an auxiliary winding, a rectifier 3, a travelling inverter 4, the travelling motor 5, a regenerative discharging resistor 6, a power converter 7, a travelling motor cooling inverter 8a, a regenerative discharging resistor cooling inverter 8b, a pump inverter 8c, a generator cooling inverter 8d, a travelling motor cooling motor 9a, a regenerative discharging resistor cooling motor 9b, a pump motor 9c, a generator cooling motor 9d, a starter battery 10, a controller 11, an accessory side DC voltage sensor 12, an auxiliary winding current sensor 13, a generator rotational speed sensor 14, a main winding voltage sensor 15, a main winding current sensor 16, a main machine side DC voltage sensor 17, a travelling motor rotational speed sensor 50, an accelerator operating device 53a, an accelerator operation amount sensor 53b, a brake operating device 54a, and a brake operation amount sensor 54b. The prime mover 1, the two-winding induction generator 2, the rectifier 3, the power converter 7, the controller 11, the accessory side DC voltage sensor 12, the auxiliary winding current sensor 13, the generator rotational speed sensor 14, the main winding voltage sensor 15, the main winding current sensor 16, and the main machine side DC voltage sensor 17 configure an electric generation system 40 according to the present embodiment. The travelling inverter 4 and the travelling motor 5 configure the main machine as the load on the main winding side. The travelling motor cooling inverter 8a, the regenerative discharging resistor cooling inverter 8b, the pump inverter 8c, the generator cooling inverter 8d, the travelling motor cooling motor 9a, the regenerative discharging resistor cooling motor 9b, the pump motor 9c, and the generator cooling motor 9d configure an accessory 41 as the load on the auxiliary winding side.

The prime mover 1 rotates a rotor of the two-winding induction generator 2. The main winding of the two-winding induction generator 2 is connected to the travelling inverter 4 through the rectifier 3. The travelling inverter 4 is connected to the travelling motor 5. When the travelling motor 5 generates electric power, the regenerative discharging resistor 6 is connected to the rectifier 3 and the travelling inverter 4. The auxiliary winding of the two-winding induction generator 2 is connected to the accessory 41 through the power converter 7. When the two-winding induction generator 2 is started, the starter battery 10 is connected to the power converter 7 and the accessory 41. Electric power demanded by the travelling motor 5 is larger than electric power demanded by the accessory 41. Therefore, since the power converter that is more expensive than the rectifier is connected to the accessory 41 whose demanded electric power is smaller, but not to the travelling inverter 4, the power converter is of a reduced capacity, reducing the cost of the electric generation system 40.

The travelling motor cooling inverter 8a is connected to the travelling motor cooling motor 9a. The regenerative discharging resistor cooling inverter 8b is connected to the regenerative discharging resistor cooling motor 9b. The pump inverter 8c is connected to the pump motor 9c. The generator cooling inverter 8d is connected to the generator cooling motor 9d. The travelling motor cooling motor 9a is controlled by the travelling motor cooling inverter 8a. The regenerative discharging resistor cooling motor 9b is controlled by the regenerative discharging resistor cooling inverter 8b. The pump motor 9c is controlled by the pump inverter 8c. The generator cooling motor 9d is controlled by the generator cooling inverter 8d. Rotational speeds that are demanded by the travelling motor cooling motor 9a, the regenerative discharging resistor cooling motor 9b, the pump motor 9c, and the generator cooling motor 9d are computed by the controller 11 and transmitted to the respective inverters.

A situation where the problem addressed by the present invention occurs will be described below by way of example with respect to operation of the dump truck. While the dump truck is repeating the work cycles described above, the two-winding induction generator 2, the travelling motor 5, and the regenerative discharging resistor 6 have their temperatures rising. In order to restrain the temperatures from rising, the two-winding induction generator 2, the travelling motor 5, and the regenerative discharging resistor 6 are cooled by driving the travelling motor cooling motor 9a, the regenerative discharging resistor cooling motor 9b, and the generator cooling motor 9d. When the dump truck waits for earth and sand to be loaded and dumps its load, the dump truck is in an idling state in which the generator rotational speed is low. However, where the temperatures are high even while the dump truck is idling, inasmuch as the travelling motor cooling motor 9a, the regenerative discharging resistor cooling motor 9b, and the generator cooling motor 9d need to be driven for high output power, the electric power demanded by the accessory 41 is increased. In this case, if an excitation current is not appropriately determined for the two-winding induction generator 2, then an excitation amount becomes excessive or deficient, tending to result in poor efficiency and fail to provide for the electric power demanded by the accessory 41.

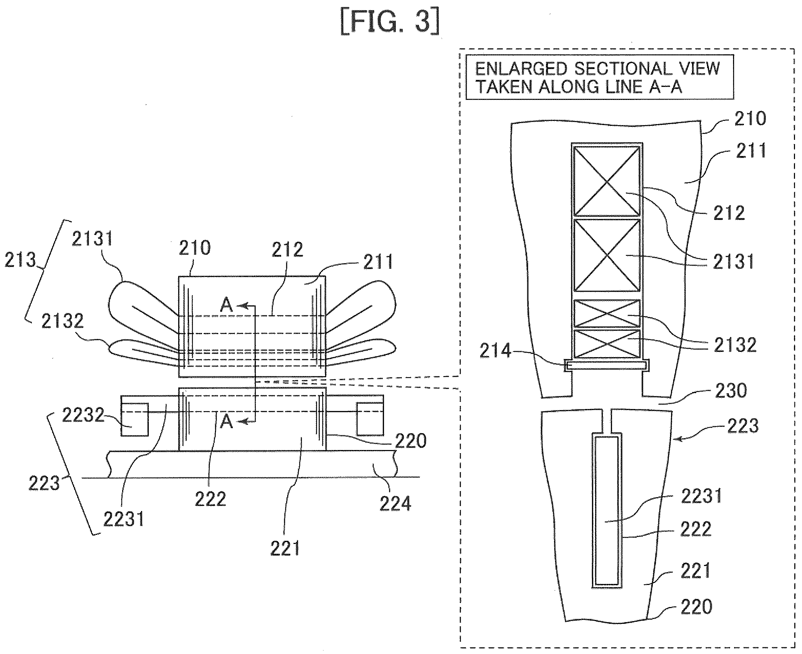

Fig. 3 is a side elevational view, together with an enlarged partial cross-sectional view, illustrating the structure of the two-winding induction generator 2 according to the present embodiment. The two-winding induction generator 2 has a stator 210 and a rotor 220. The stator 210 has a primary winding 213 disposed in a stator slot 212 formed by a stator core 211. The primary winding 213 includes a main winding 2131 and an auxiliary winding 2132. The primary winding 213 is retained in the stator slot 212 by a wedge 214. The rotor 220 has a rotor bar 2231 disposed in a rotor slot 222 formed by a rotor core 221. The rotor bar 2231 has ends short-circuited by end rings 2232. A secondary conductor 223 has the rotor bar 2231 and the end rings 2232. A gap 230 is present between the stator 210 and the rotor 220.

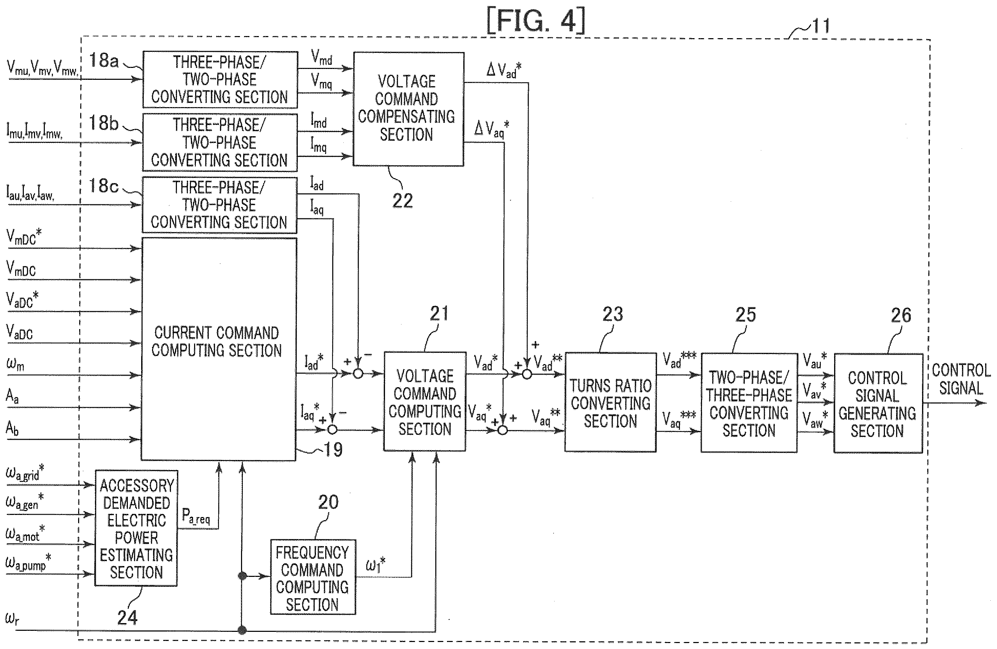

Fig. 4 is a functional block diagram of the controller 11 controlling the power converter 7. As illustrated in Fig. 4, the controller 11 includes three-phase/two-phase converting sections 18a, 18b, and 18c, a current command computing section 19, a frequency command computing section 20, a voltage command computing section 21, a voltage command compensating section 22, a turns ratio converting section 23, an accessory demanded electric power estimating section 24, a two-phase/three-phase converting section 25, and a control signal generating section 26. The controller 11 includes a controlling section having a computing processing function and an input/output interface for inputting and outputting signals from and to an external device, for example. The controller 11 performs the functions of the various sections by executing programs stored in a storage device such as a ROM. According to the present embodiment, the controller 11 carries out voltage control and current control on the main winding and the auxiliary winding via the power converter 7 in order to bring a main machine side DC voltage VmDC and an accessory side DC voltage VaDC respectively into conformity with a main machine side DC voltage command value VmDC* and an accessory side DC voltage command value VaDC*.

The voltage control is carried out by the current command computing section 19 that performs a proportional integral computation, for example, using values (the main machine side DC voltage VmDC and the accessory side DC voltage VaDC) acquired from the main machine side DC voltage sensor 17 and the accessory side DC voltage sensor 12 and computes auxiliary winding current command values Iad* and Iaq*. The current control is carried out by the voltage command computing section 21 that performs a proportional integral computation, for example, using values (a d-axis auxiliary winding current Iad and a q-axis auxiliary winding current Iaq) obtained by the three-phase/two-phase converter 18c that coverts values (three-phase currents Iau, Iav, and Iaw of the auxiliary winding) obtained from the auxiliary winding current sensor 13 onto d and q axes by way of coordinate transformation and computes auxiliary winding voltage command values Vad* and Vaq*. In the voltage command computing section 21, a generator rotational speed $\omega r$ acquired from the generator rotational speed sensor 14 and a frequency command value $\omega 1*$ are used to compensate respectively for an induced voltage produced by rotation of the rotor of the two-winding induction generator 2 and an interference component between the d and q axes.

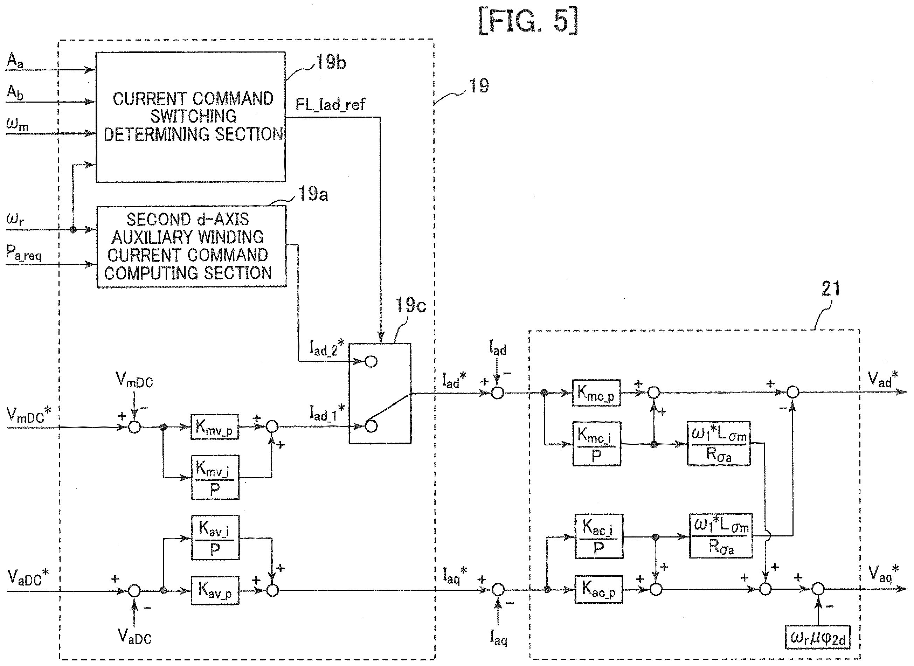

Fig. 5 is a block diagram illustrating processing details of the current command computing section 19 and the voltage command computing section 21. The current command computing section 19 computes a first d-axis auxiliary winding current command value Iad_1* by performing a proportional integral computation on the difference between the main machine side DC voltage command value VmDC* and the main machine side DC voltage VmDC. In Fig. 5, Kmv_p indicates a main machine side voltage control proportional gain and Kmv_i indicates a main machine side voltage control integral gain.

The current command computing section 19 has a second d-axis auxiliary winding current command computing section 19a, a current command switching determining section 19b, and a current command switching section 19c. The second d-axis auxiliary winding current command computing section 19a computes a second d-axis auxiliary winding current command value Iad_2* on the basis of the generator rotational speed $\omega r$ and accessory demanded electric power Pa_req estimated by the accessory demanded electric power estimating section 24. The current command switching determining section 19b determines whether a current command switching flag FL_Iad_ref is on or off on the basis of a travelling motor rotational speed $\omega m$ and the generator rotational speed $\omega r$. The current command switching section 19c outputs the first d-axis auxiliary winding current command value Iad_1* or the second d-axis auxiliary winding current command value Iad_2* as a d-axis auxiliary winding current command value Iad* depending on the current command switching flag FL_Iad_ref.

The current command computing section 19 performs a proportional integral computation on the difference between the accessory side DC voltage command value VaDC* and the accessory side DC voltage VaDC and outputs the result as a q-axis auxiliary winding current command value Iaq*. In Fig. 5, Kav_p indicates an accessory side voltage control proportional gain and Kav_i indicates an accessory side voltage control integral gain.

The voltage command computing section 21 subtracts the interference component produced between the d and q axes from a proportional integral value of the difference between the d-axis auxiliary winding current command values Iad* and the d-axis auxiliary winding current Iad and outputs the difference as the auxiliary winding voltage command value Vad*. The interference component produced between the d and q axes is obtained by multiplying an integral value of the difference between the d-axis auxiliary winding current command values Iad* and the d-axis auxiliary winding current Iad by $\omega 1*L\sigma m/R\sigma a$. Note that, in FIG. 5, Kmc_p indicates a main machine side current control proportional gain and Kmc_i indicates a main machine side current control integral gain.

In addition, the voltage command computing section 21 adds the interference component produced between the d and q axes and an induced voltage $\omega r*\mu*\phi 2d$ to a proportional integral value of the difference between the q-axis auxiliary winding current command values Iaq* and the q-axis auxiliary winding current Iaq and outputs the resultant as the q-axis auxiliary winding voltage command value Vaq*. The interference component between the d and q axes is obtained by multiplying an integral value of the difference between the q-axis auxiliary winding current command values Iaq* and the q-axis auxiliary winding current Iaq by $\omega 1*L\sigma m/R\sigma a$, using an accessory side current control integral gain Kac_i. Note that, in FIG. 5, Kac_p indicates an accessory side current control proportional gain and Kac_i indicates the accessory side current control integral gain.

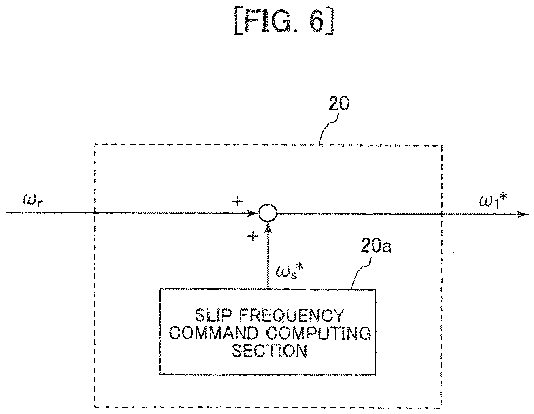

Fig. 6 is a block diagram illustrating processing details of the frequency command computing section 20. The frequency command computing section 20 adds a frequency command value $\omega s*$ computed by a slip frequency command computing section 20a to the generator rotational speed or and outputs the sum as the frequency command value $\omega 1*$.

Referring back to Fig. 4, the role of the voltage command compensating section 22 will be described below. The two-winding induction generator 2 produces an interference component between the main and auxiliary windings because they are magnetically coupled to each other. This phenomenon can be explained using the following differential equation 1 with respect to the auxiliary winding of the two-winding induction generator 2.

[Equation 1]

$$p\begin{bmatrix}I_{ad}\\I_{aq}\end{bmatrix}=\begin{bmatrix}\dfrac{R_{\sigma m}}{L_{\sigma m}}&0\\0&\dfrac{R_{\sigma m}}{L_{\sigma m}}\end{bmatrix}\cdot\begin{bmatrix}I_{md}\\I_{mq}\end{bmatrix}+\begin{bmatrix}-\dfrac{R_{\sigma a}}{L_{\sigma m}}&\omega_1\\-\omega_1&-\dfrac{R_{\sigma a}}{L_{\sigma m}}\end{bmatrix}\cdot\begin{bmatrix}I_{ad}\\I_{aq}\end{bmatrix}$$

$$+\begin{bmatrix}-\dfrac{\mu}{L_{\sigma m}\tau_2}&-\dfrac{\omega_r\mu}{L_{\sigma m}}\\\dfrac{\omega_r\mu}{L_{\sigma m}}&-\dfrac{\mu}{L_{\sigma m}\tau_2}\end{bmatrix}\cdot\begin{bmatrix}\varphi_{2d}\\\varphi_{2q}\end{bmatrix}+\begin{bmatrix}-\dfrac{1}{L_{\sigma m}}&0\\0&-\dfrac{1}{L_{\sigma m}}\end{bmatrix}\cdot\begin{bmatrix}V_{md}\\V_{mq}\end{bmatrix}+\begin{bmatrix}\dfrac{1}{L_{\sigma a}}&0\\0&\dfrac{1}{L_{\sigma a}}\end{bmatrix}\cdot\begin{bmatrix}V_{ad}\\V_{aq}\end{bmatrix}$$

The symbols in the equation 1 are set forth as follows:

R$\sigma$m: main winding resistance regarding the auxiliary winding in a dp-axis model
R$\sigma$a: auxiliary winding resistance regarding the auxiliary winding in the dp-axis model
L$\sigma$m: main winding self inductance regarding the auxiliary winding in the dp-axis model
Loa: auxiliary winding self inductance regarding the auxiliary winding in the dp-axis model
$\mu$ : primary conversion coefficient regarding the auxiliary winding
$\tau2$: secondary time constant (= secondary-inductance/secondary-resistance)
p: differential operator
Imd, Imq: d-axis main winding current, q-axis main winding current
Vmd, Vmq: d-axis main winding voltage, q-axis main winding voltage
Vad, Vaq: d-axis auxiliary winding voltage, q-axis auxiliary winding voltage
$\varphi2d$, $\varphi2q$: d-axis secondary flux, q-axis secondary flux
$\omega1$: primary frequency

The equation 1 is simplified into the following equation 2:

[Equation 2]

$$\begin{bmatrix}V_{ad}\\V_{aq}\end{bmatrix}=\frac{L_{\sigma a}}{L_{\sigma m}}\left\{\begin{bmatrix}R_{\sigma a}+pL_{\sigma m}&-\omega_1 L_{\sigma m}\\\omega_1 L_{\sigma m}&R_{\sigma a}+pL_{\sigma m}\end{bmatrix}\cdot\begin{bmatrix}I_{ad}\\I_{aq}\end{bmatrix}\right.$$

$$\left.+\begin{bmatrix}\dfrac{\mu}{\tau_2}&\omega_r\mu\\-\omega_r\mu&\dfrac{\mu}{\tau_2}\end{bmatrix}\cdot\begin{bmatrix}\varphi_{2d}\\\varphi_{2q}\end{bmatrix}+\begin{bmatrix}-R_{\sigma m}&0\\0&-R_{\sigma m}\end{bmatrix}\cdot\begin{bmatrix}I_{md}\\I_{mq}\end{bmatrix}+\begin{bmatrix}V_{md}\\V_{mq}\end{bmatrix}\right\}$$

It can be seen from the equation 2 that the auxiliary winding voltages include the main winding currents Imd and Imq and the main winding voltages Vmd and Vmq on the d and q-axes. The terms relative to the main winding currents and the main winding voltages represent the interference component of the main winding with respect to the auxiliary winding, and are responsible for instability in controlling the two-winding induction generator 2. Consequently, by having the controller 11 compensate for the interference component, it is possible to control the two-winding induction generator 2 stably even though the main and auxiliary windings are magnetically coupled to each other. Specifically, the voltage compensation amounts $\Delta$Vad* and $\Delta$Vaq* computed by the voltage command compensating section 22 are added respectively to the auxiliary winding voltage command values Vad* and Vaq* computed by the voltage command computing section 21, and the sums are input as compensated auxiliary winding voltage command values Vad** and Vaq** to the turns ratio converting section 23.
The turns ratio converting section 23 multiplies the compensated auxiliary winding voltage command values Vad** and Vaq** by a ratio between the main winding self inductance L$\sigma$m regarding the auxiliary winding in the dp-axis model and the auxiliary winding self inductance L$\sigma$a regarding the auxiliary winding in the dp-axis model. Auxiliary winding voltage command values Vad*** and Vaq*** that have been converted in terms of the turns ratio by the turns ratio converting section 23 are input to the two-phase/three-phase converting section 25 that converts from two phases to three phases. Converted three-phase voltage command values Vau*, Vav*, and Vaw* are input to the control signal generating section 26. The three-phase/two-phase converting sections 18a, 18b, and 18c and the two-phase/three-phase converting section 25 use a value obtained by integrating the frequency command value ω1* for the phases used for coordinate transformation, for example. The control signal generating section 26 generates a control signal to be sent to the power converter 7 on the basis of a comparison between a duty signal computed from the three-phase voltage command values Vau*, Vav*, and Vaw* and a carrier wave, for example.

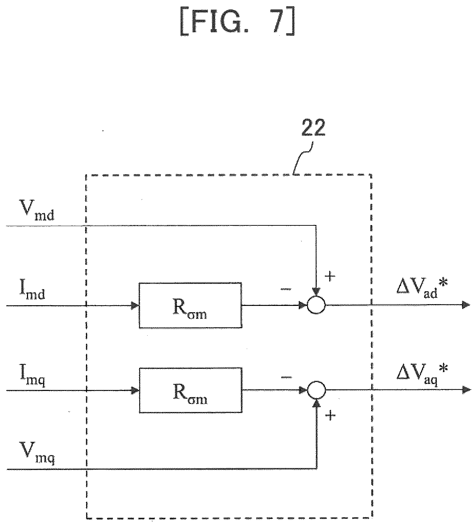

Fig. 7 is a block diagram illustrating processing details of the voltage command compensating section 22. Values acquired from the main winding voltage sensor 15 and the main winding current sensor 16 (three-phase currents Imu, Imv, and Imw of the main winding and three-phase voltages Vmu, Vmv, and Vmw of the main winding) are coordinate-transformed by the three-phase/two-phase converting sections 18a and 18b, and coordinate-transformed values (Imd, Imq, Vmd, and Vmq) are input to the voltage command compensating section 22. The d-axis voltage compensation amount ΔVad* represents the difference between the d-axis main winding voltage Vmd and a multiplied value of the d-axis main winding current Imd and the main winding resistance Rσm regarding the auxiliary winding, and the q-axis voltage compensation amount ΔVaq* represents the difference between the q-axis main winding voltage Vmq and a multiplied value of the q-axis main winding current Imq and the main winding resistance Rσm regarding the auxiliary winding. By thus directly using the values acquired from the main winding voltage sensor 15 and the main winding current sensor 16, voltage compensation amounts ΔVad* and ΔVaq* can be computed without a computation delay.

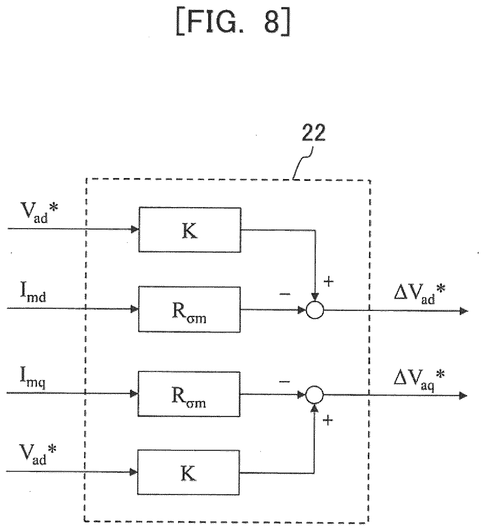

Fig. 8 is a block diagram illustrating processing details of a voltage command compensating section 22 that does not use the main winding voltage sensor 15, which may be considered to be a modification of the processing details illustrated in Fig. 7. As illustrated in Fig. 8, instead of the main winding voltages Vmd and Vmq detected by the main winding voltage sensor 15, the auxiliary winding voltage command values Vad* and Vaq* output from the voltage command computing section 21 are input to the voltage command compensating section 22. Utilizing the property that the voltage across the main winding of the two-winding induction generator 2 is generally proportional to the voltage across the auxiliary winding thereof, the voltage command compensating section 22 multiplies the auxiliary winding voltage command values Vad* and Vaq* by a corrective gain K (a ratio of the main winding voltage to the auxiliary winding voltage), thereby computing estimated values of the main winding voltages Vmd and Vmq. This configuration can also achieve the same advantages as those of the configuration illustrated in Fig. 7 and is able to simplify the configuration of the electric generation system 40 because it does not require the main winding voltage sensor 15 for detecting the main winding voltages Vmd and Vmq.

Referring back to Fig. 4, the accessory demanded electric power estimating section 24 will be described below. Accessory demanded electric power Pa_req that is output from the accessory demanded electric power estimating section 24 represents electric power demanded by the accessory 41. According to the present embodiment, the accessory demanded electric power Pa_req represents total electric power required to drive the travelling motor cooling motor 9a, the regenerative discharging resistor cooling motor 9b, the pump motor 9c, and the generator cooling motor 9d at respective desired rotational speeds.

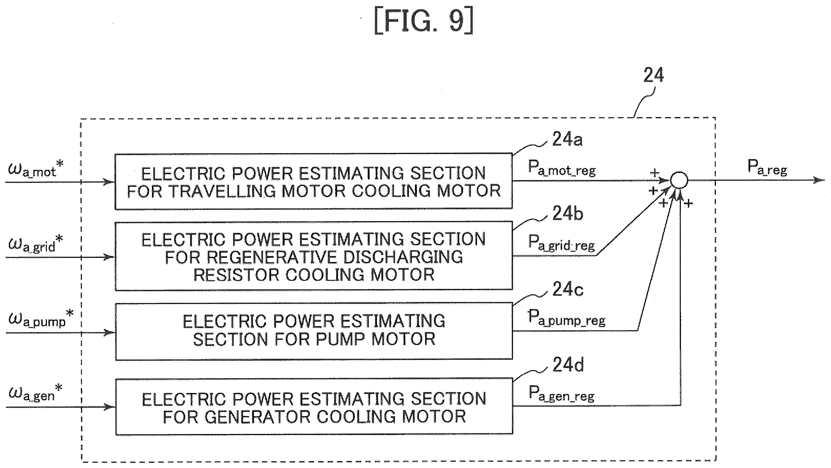

Fig. 9 is a block diagram illustrating processing details of the accessory demanded electric power estimating section 24. An electric power estimating section 24a for travelling motor cooling motor computes electric power (travelling motor cooling motor demanded electric power) Pa_mot_req required when the travelling motor cooling motor 9a rotates at a travelling motor cooling motor speed command ωa_mot*. An electric power estimating section 24b for regenerative discharging resistor cooling motor computes electric power (regenerative discharging resistor cooling motor demanded electric power) Pa_grid_req required when the regenerative discharging resistor cooling motor 9b rotates at a regenerative discharging resistor cooling motor speed command ωa_grid*. An electric power estimating section 24c for pump motor computes electric power (pump motor demanded electric power) Pa_pump_req required when the pump motor 9c rotates at a pump motor speed command ωa_pump*. An electric power estimating section 24d for generator cooling motor computes electric power (generator cooling motor demanded electric power) Pa_gen_req required when the generator cooling motor 9d rotates at a generator cooling motor speed command ωa_gen*. The travelling motor cooling motor demanded electric power Pa_mot_req, the regenerative discharging resistor cooling motor demanded electric power Pa_grid_req, the pump motor demanded electric power Pa_pump_req, and the generator cooling motor demanded electric power Pa_gen_req that have been computed as described above are totaled to compute accessory demanded electric power Pa_req, which is input to the second d-axis auxiliary winding current command computing section 19a.

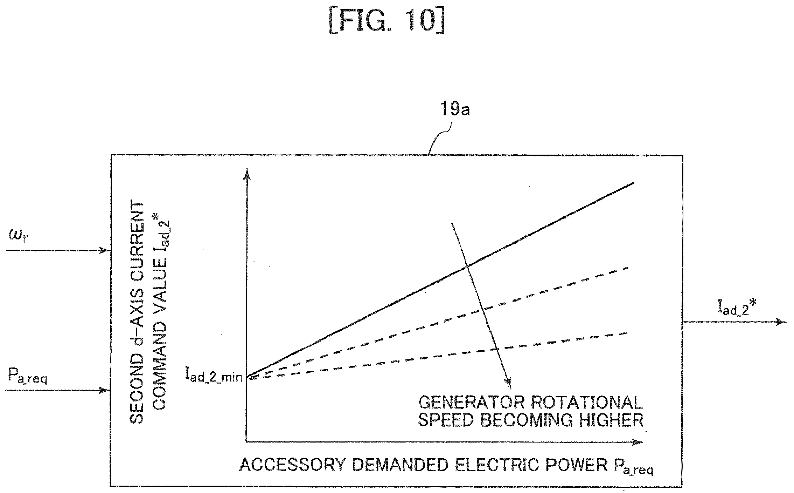

The second d-axis auxiliary winding current command computing section 19a illustrated in Fig. 5 computes a second d-axis auxiliary winding current command value Iad_2* on the basis of the accessory demanded electric power Pa_req computed by the accessory demanded electric power estimating section 24 and the generator rotational speed ωr in accordance with the characteristics illustrated in Fig. 10. Fig. 10 is a diagram illustrating an example of relationship between the accessory demanded electric power Pa_req, the generator rotational speed ωr, and the second d-axis auxiliary winding current command value Iad_2*. As illustrated in Fig. 10, the second d-axis auxiliary winding current command value Iad_2* increases in proportion to the accessory demanded electric power Pa_req. The degree at which second d-axis auxiliary winding current command value Iad_2* increases with respect to the accessory demanded electric power Pa_req (the gradient of the graph in Fig. 10) is smaller, the higher the generator rotational speed ωr becomes. When the accessory demanded electric power Pa_req is zero, the second d-axis auxiliary winding current command value Iad_2* is of a predetermined minimum value Iad_2_min regardless of the magnitude of the generator rotational speed ωr. The characteristics illustrated in Fig. 10 are determined in advance by computation or experimentation.

Referring back to Fig. 5, the current command switching determining section 19b will be described below.. The current command switching determining section 19b turns on the current command switching flag FL_Iad_ref (FL_Iad_ref = 1) if the travelling motor rotational speed ωm is lower than a predetermined value ωm_th and the generator rotational speed ωr is lower than a predetermined value ωr_th, or the accelerator operating device 53a is not operated and the travelling motor rotational speed ωm is equal to or larger than the predetermined value ωm_th, or the brake operating device 54a is operated.

The predetermined value ωm_th is a travelling motor rotational speed threshold value, i.e., a threshold value for determining whether the vehicle body is in a travelling state or not. The predetermined value ωr_th is a generator rotational speed threshold value, i.e., a threshold for determining whether the vehicle body is in an idling state or not. A state where the travelling motor rotational speed ωm is lower than the travelling motor rotational speed threshold value ωm_th and the generator rotational speed ωr is lower than the generator rotational speed threshold value ωr_th corresponds to the idling state where the travelling motor 5 is stopped. A state where the accelerator operating device 53a is not operated and the travelling motor rotational speed ωm is equal to or larger than the travelling motor rotational speed threshold value ωm_th or a state where the brake operating device 54a is operated corresponds to a retarded state where the travelling motor 5 generates regenerative electric power. Each of the travelling motor rotational speed threshold value ωm_th and the generator rotational speed threshold value ωr_th is determined in advance by computation or experimentation.

If the current command switching flag FL_Iad_ref is turned off (FL_Iad_ref = 0), then the current command switching section 19c outputs a first d-axis auxiliary winding current command value Iad_1* as a d-axis auxiliary winding current command value Iad*. If the current command switching flag FL_Iad_ref is turned on (FL_Iad_ref = 1), then the current command switching section 19c outputs a second d-axis auxiliary winding current command value Iad_2* as a d-axis auxiliary winding current command value Iad*.

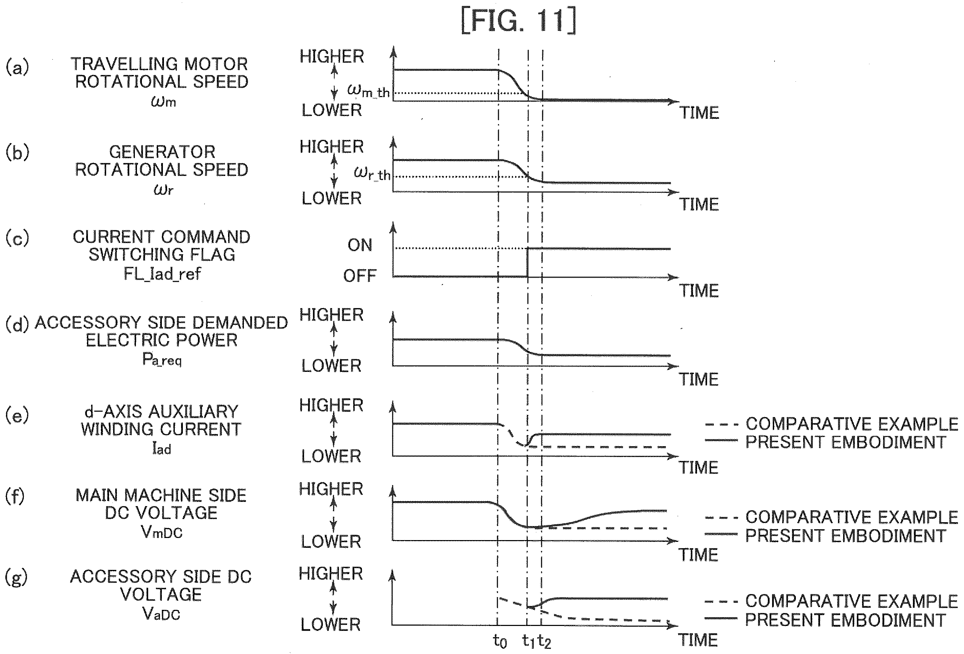

Main operational details and advantages of the electrically driving system according to the present embodiment will be described below with reference to Fig. 11. Fig. 11 is a diagram illustrating chronological changes in parameters (travelling motor rotational speed ωm, generator rotational speed ωr, current command switching flag FL_Iad_ref, accessory demanded electric power Pa_req, d-axis auxiliary winding current Iad, main machine side DC voltage VmDC, and accessory side DC voltage VaDC) of the electrically driving system according to the present embodiment. An example of operation where the travelling motor rotational speed ωm, the generator rotational speed ωr, and the accessory demanded electric power Pa_req have changed will be described below. In order to clarify the advantages of the present embodiment, the operation will be described in comparison with a situation where the second d-axis auxiliary winding current command value Iad_2* computed by the second d-axis auxiliary winding current command computing section 19a is not used, and the first d-axis auxiliary winding current command value Iad_1* is set at all times as the d-axis auxiliary winding current command value Iad*. It is assumed that change amounts in the travelling motor rotational speed ωm, the generator rotational speed or, and the accessory demanded electric power Pa_req are the same between the electrically driving system according to the present embodiment and an electrically driving system according to a comparative example.

As illustrated in Fig. 11, the chronological changes in the parameters according to the present embodiment are indicated by the solid-line curves, whereas the chronological changes in the parameters according to the comparative example are indicated by the broken-line curves. The horizontal axes of Figs. 11(a) to 11(g) represent time (elapsed time). The vertical axis of Fig. 11(a) represents the travelling motor rotational speed ωm. The vertical axis of Fig. 11(b) represents the generator rotational speed or. The vertical axis of Fig. 11(c) represents the current command switching flag FL_Iad_ref. The vertical axis of Fig. 11(d) represents the accessory demanded electric power Pa_req. The vertical axis of Fig. 11(e) represents the d-axis auxiliary winding current Iad. The vertical axis of Fig. 11(f) represents the main machine side DC voltage VmDC detected by the main machine side DC voltage sensor 17. The vertical axis of Fig. 11(g) represents the accessory side DC voltage VaDC detected by the accessory side DC voltage sensor 12.

In Fig. 11, time t0 is the time point at which the travelling motor rotational speed ωm starts to change. Time t1 is the time point at which the current command switching flag FL_Iad_ref changes from off to on based on the travelling motor rotational speed ωm and the generator rotational speed ωr. Time t2 is the time point at which the travelling motor 5 is stopped according to the present embodiment.

As illustrated in Fig. 11(a), according to the present embodiment, the travelling motor 5 starts to decelerate from time t0 and is stopped at time t2.

As illustrated in Fig. 11(b), according to the present embodiment, the generator rotational speed ωr decreases from time t0 to time t2 and the generator rotates at an idling rotational speed after time t2.

**EP 4 683 208 A1**

As illustrated in Fig. 11(c), according to the present embodiment, the current command switching determining section 19b determines that the travelling motor rotational speed ωm becomes equal to or lower than the travelling motor rotational speed threshold value ωm_th and the generator rotational speed ωr becomes equal to or lower than the generator rotational speed threshold value ωr_th at time t1, and sets the current command switching flag FL_Iad_ref from off to on.

As illustrated in Fig. 11(d), according to the present embodiment, the accessory demanded electric power Pa_req decreases to a predetermined value after time t0.

As illustrated in Fig. 11(e), according to the comparative example, the d-axis auxiliary winding current Iad decreases to a predetermined value after time t0. This is because the travelling motor rotational speed ωm has decreased, making it unnecessary to keep the main machine side DC voltage VmDC high.

In contrast, according to the present embodiment, although the waveform remains the same as the waveform in the comparative example illustrated in Fig. 11(e) until time t1, after the d-axis auxiliary winding current command value Iad* has its setting value switched from the first d-axis auxiliary winding current command value Iad_1* to the second d-axis auxiliary winding current command value Iad_2* at time t1, the d-axis auxiliary winding current Iad increases to a predetermined value because the power converter 7 outputs the d-axis auxiliary winding current Iad that has taken into account the generator rotational speed ωr and the accessory demanded electric power Pa_req.

As illustrated in Fig. 11(f), according to the comparative example, the main machine side DC voltage VmDC decreases to a predetermined value after time t0. This is because the main machine side DC voltage command value VmDC* is lowered because the travelling motor rotational speed ωm has decreased, making it unnecessary to keep the main machine side DC voltage VmDC high.

In contrast, according to the present embodiment, although the waveform remains the same as the waveform in the comparative example illustrated in Fig. 11(f) until time t1, after the d-axis auxiliary winding current command value Iad* has its setting value switched from the first d-axis auxiliary winding current command value Iad_1* to the second d-axis auxiliary winding current command value Iad_2* at time t1, the d-axis auxiliary winding current Iad increases to a predetermined value. Therefore, the main winding is excited, increasing the main machine side DC voltage VmDC. Since the d-axis auxiliary winding current command value Iad* at this time has its upper limit value determined to match a maximum voltage that the main machine side DC voltage VmDC can be, the main machine side DC voltage VmDC does not increase beyond the maximum voltage. Where the main machine side DC voltage VmDC exceeds the maximum voltage, the regenerative discharging resistor 6 is connected so as to discharge the energy to make the main machine side DC voltage VmDC equal to or lower than the maximum voltage.

As illustrated in Fig. 11(g), according to the comparative example, the accessory side DC voltage VaDC decreases after time t0. This is because a sufficient excitation amount cannot be obtained for the accessory demanded electric power Pa_req, making it unable to keep the accessory side DC voltage VaDC in conformity with the accessory side DC voltage command value VaDC* since the first d-axis auxiliary winding current command value Iad_1* that has not taken into account the generator rotational speed ωr and the accessory demanded electric power Pa_req is set as the d-axis auxiliary winding current command value Iad*.

In contrast, according to the present embodiment, although the waveform remains the same as the waveform of the comparative example illustrated in Fig. 11(g) until time t1, inasmuch as the power converter 7 outputs the d-axis auxiliary winding current Iad that has taken into account the generator rotational speed ωr and the accessory demanded electric power Pa_req at time t1, the accessory side DC voltage VaDC can be restored to the accessory side DC voltage command value VaDC*.

A method for verifying whether the configuration of the present embodiment has been properly installed in the electrically driving system or not will be described below. Since the configuration of the present embodiment is highly likely to be implemented as software (the programs of the controller 11), it is expected that the verification may hardly be made on the basis of the appearance of the electrically driving system, for example. For this reason, the electrically driving system is caused to operate and the verification is performed on the basis of the behavior of the electrically driving system.

For making the verification, voltage sensors are connected to the DC parts of the main machine side and the accessory side of the electric generation system 40 (illustrated in Fig.2), a load device is connected to the DC part on the accessory side, and the voltage sensors measure a main machine side DC voltage and an accessory side DC voltage at the time where load of the load device is varied. At this time, the main machine side is under no load.

When the rotational speed of the prime mover 1 is reduced and the accessory side load is increased, it can be confirmed that the configuration according to the present embodiment has been installed if the main machine side DC voltage increases and the accessory side DC voltage maintains a constant value. Conversely, if the configuration according to the present embodiment has not been installed, the main machine side DC voltage does not increase and the accessory side DC voltage is unable to maintain a constant value. Thus, it can be verified whether the configuration according to the present embodiment has been installed or not by measuring the DC voltages on the main machine side and the accessory side of the electric generation system 40 with the voltage sensors.

9

(Conclusions)

According to the present embodiment, in the electrically driving system including the travelling motor 5, the accessory 41, the generator 2 that has the stator 210 including the main winding 2131 and the auxiliary winding 2132, the rectifier 3 connected to the main winding 2131 for converting an AC voltage generated by the main winding 2131 to a first DC voltage VmDC, the travelling inverter 4 connected to the rectifier 3 for converting the first DC voltage VmDC to an AC voltage and supplying the AC voltage to the travelling motor 5, the power converter 7 connected to the auxiliary winding 2132 for controlling the voltages across the main winding 2131 and the auxiliary winding 2132 and converting an AC voltage generated by the auxiliary winding 2132 to a second DC voltage VaDC and supplying the second DC voltage VaDC to the accessory 41, and the controller 11 for controlling the power converter 7, the controller 11 computes a first d-axis current command value Iad_1* for the auxiliary winding 2132 on the basis of the first DC voltage VmDC and a command value VmDC* for the first DC voltage VmDC, computes a second d-axis current command value Iad_2* for the auxiliary winding 2132 on the basis of a rotational speed $\omega$r of the generator 2 and electric power Pa_req demanded by the accessory 41, controls the power converter 7 so as to bring a d-axis current value of the auxiliary winding 2132 into conformity with the first d-axis current command value Iad_1* in a traction state where the travelling inverter 4 supplies electric power to the travelling motor 5, and controls the power converter 7 so as to bring the d-axis current value of the auxiliary winding 2132 into conformity with the second d-axis current command value Iad_2* in a retarded state where the travelling motor 5 generates regenerative electric power or an idling state where the travelling motor 5 is stopped.

According to the present embodiment thus configured, in the electrically driving system including the two-winding induction generator 2, even in a state (the idling state or the retarded state) where the generator rotational speed $\omega$r is reduced by a reduction in the load (electric power demanded by the travelling inverter 4 and the travelling motor 5) on the main machine, it is possible for the single power converter 7 provided on the side of the auxiliary winding to keep the accessory side DC voltage VaDC as a voltage (accessory side DC voltage command value VaDC*) required to provide for the electric power demanded by the accessory 41. It is thus possible for the single power converter 7 provided on the side of the auxiliary winding to keep the DC voltage VaDC on the auxiliary winding side, regardless of the rotational speed $\omega$r of the two-winding induction generator 2 and the magnitude of the load (accessory demanded electric power Pa_req) on the auxiliary winding.

Moreover, the electrically driving system according to the present embodiment includes the accelerator operating device 53a for instructing the travelling motor 5 to accelerate, the brake operating device 54a for instructing the travelling motor 5 to decelerate, and the first rotational speed sensor 50 for detecting the rotational speed $\omega$m of the travelling motor 5, in which the controller 11 determines a state where the accelerator operating device 53a is not operated and the travelling motor rotational speed $\omega$m detected by the first rotational speed sensor 50 is equal to or higher than a first predetermined value $\omega$m_th or a state where the brake operation device 54a is operated, as the retarded state. In this fashion, the retarded state can be determined accurately.

Furthermore, the electrically driving system according to the present embodiment includes the first rotational speed sensor 50 for detecting the rotational speed $\omega$m of the travelling motor 5 and the second rotational speed sensor 14 for detecting the rotational speed $\omega$r of the generator 2, in which the controller 11 determines a state where the travelling motor rotational speed $\omega$m detected by the first rotational speed sensor 50 is lower than a first predetermined value $\omega$m_th and the rotational speed $\omega$r of the generator 2 detected by the second rotational speed sensor 14 is lower than a second predetermined value or_th, as the idling state. In this fashion, the idling state can be determined accurately.

Although the embodiment of the present invention has been described in detail above, the above embodiment has been described in detail for a better understanding of the present invention and the present invention may not necessarily be limited to anything including all the configurations described above. For example, the control lines and information lines illustrated in the drawings represent those lines that are deemed necessary for describing the embodiment and do not cover all the control lines and information lines on products. Actually, almost all the configurations may be considered to be connected to each other.

Moreover, the present invention is not limited to the above embodiment. For example, the modifications described below fall within the range of the present invention. It is possible to combine the configurations according to the modifications and the configurations described in the above embodiment and also to combine the configurations described in the different modifications below.

<Modification 1>

In the above embodiment, the transition between the first d-axis auxiliary winding current command value Iad_1* and the second d-axis auxiliary winding current command value Iad_2* may be made gradual. For example, the current command switching section 19c may include in its output a rate-of-change limiting section for making the d-axis auxiliary winding current command value Iad* vary gradually upon switching between the first d-axis auxiliary winding current command value Iad_1* and the second d-axis auxiliary winding current command value Iad_2*. It is thus possible to restrain transient variations of the auxiliary winding current, the main machine side DC voltage VmDC, and the accessory side DC voltage VaDC.

<Modification 2>

In the above embodiment, the controller 11 may perform a moving average process or a low-pass filter process on values used for various determining and computing, in order to avoid being adversely affected by disturbances and noises.

<Modification 3>

The functions of the controller 11 described in the above embodiment may be implemented partly or wholly by hardware (for example, integrated circuits designing logics for performing the functions).

<Modification 4>

In the above embodiment, the electrically driving system mounted on the dump truck has been described by way of example. However, the application of the present invention is not limited to the illustrated dump truck. The present invention is applicable to various vehicles that have an electric generation system having loads in two systems.

Description of Reference Characters

| 1: | prime mover |
| 2: | generator |
| 2: | two-winding induction generator |
| 3: | rectifier |
| 4: | travelling inverter |
| 5: | travelling motor |
| 6: | regenerative discharging resistor |
| 7: | power converter |
| 8a: | travelling motor cooling inverter |
| 8b: | regenerative discharging resistor cooling inverter |
| 8c: | pump inverter |
| 8d: | generator cooling inverter |
| 9a: | travelling motor cooling motor |
| 9b: | regenerative discharging resistor cooling motor |
| 9c: | pump motor |
| 9d: | generator cooling motor |
| 10: | starter battery |
| 11: | controller |
| 12: | accessory side DC voltage sensor |
| 13: | auxiliary winding current sensor |
| 14: | generator rotational speed sensor (second rotational speed sensor) |
| 15: | main winding voltage sensor |
| 16: | main winding current sensor |
| 17: | main machine side DC voltage sensor |
| 19: | current command computing section |
| 19a: | second d-axis auxiliary winding current command computing section |
| 19b: | current command switching determining section |
| 19c: | current command switching section |
| 20: | frequency command computing section |
| 20a: | frequency command computing section |
| 21: | voltage command computing section |
| 22: | voltage command compensating section |
| 23: | turns ratio converting section |
| 24: | accessory demanded electric power estimating section |
| 24a: | electric power estimating section for travelling motor cooling motor |

| | |
|---|---|
| 24b: | electric power estimating section for regenerative discharging resistor cooling motor |
| 24c: | electric power estimating section for pump motor |
| 24d: | electric power estimating section for generator cooling motor |
| 26: | control signal generating section |
| 30: | vehicle body |
| 31: | loading platform |
| 32: | cabin |
| 33: | driven wheel |
| 34: | drive wheel |
| 40: | electric generation system |
| 41: | accessory |
| 50: | travelling motor rotational speed sensor (first rotational speed sensor) |
| 53a: | accelerator operating device |
| 53b: | accelerator operation amount sensor |
| 54a: | brake operating device |
| 54b: | brake operation amount sensor |
| 210: | stator |
| 211: | stator core |
| 212: | stator slot |
| 213: | primary winding |
| 214: | wedge |
| 220: | rotor |
| 221: | rotor core |
| 222: | rotor slot |
| 223: | secondary conductor |
| 230: | gap |
| 2131: | main winding |
| 2132: | auxiliary winding |
| 2231: | rotor bar |
| 2232: | end ring |

**Claims**

1. An electrically driving system comprising:

a travelling motor;
an accessory;
a generator that has a stator including a main winding and an auxiliary winding;
a rectifier that is connected to the main winding and converts an alternating-current voltage generated by the main winding to a first direct-current voltage;
a travelling inverter that is connected to the rectifier and converts the first direct-current voltage to an alternating-current voltage to be supplied to the travelling motor;
a power converter that is connected to the auxiliary winding, controls voltages across the main winding and the auxiliary winding, and converts an alternating-current voltage generated by the auxiliary winding to a second direct-current voltage to be supplied to the accessory; and
a controller for controlling the power converter, wherein
the controller is configured to
compute a first d-axis current command value for the auxiliary winding on a basis of the first direct-current voltage and a command value for the first direct-current voltage,
compute a second d-axis current command value for the auxiliary winding on a basis of a rotational speed of the generator and electric power demanded by the accessory,
control the power converter so as to bring a d-axis current value of the auxiliary winding into conformity with the first d-axis current command value in a traction state where the travelling inverter supplies electric power to the travelling motor, and
control the power converter so as to bring the d-axis current value of the auxiliary winding into conformity with the second d-axis current command value in a retarded state where the travelling motor generates regenerative electric power or an idling state where the travelling motor is stopped.

2. The electrically driving system according to claim 1, wherein

the electrically driving system includes
an accelerator operating device for instructing the travelling motor to accelerate,
a brake operating device for instructing the travelling motor to decelerate, and
a first rotational speed sensor for detecting a rotational speed of the travelling motor, and
the controller is configured to determine a state where the accelerator operating device is not operated and the rotational speed of the travelling motor, the rotational speed being detected by the first rotational speed sensor, is equal to or higher than a first predetermined value or a state where the brake operation device is operated, as the retarded state.

3. The electrically driving system according to claim 1, wherein

the electrically driving system includes
a first rotational speed sensor for detecting a rotational speed of the travelling motor, and
a second rotational speed sensor for detecting the rotational speed of the generator, and
the controller is configured to determine a state where the rotational speed of the travelling motor, the rotational speed being detected by the first rotational speed sensor, is lower than a first predetermined value and the rotational speed of the generator, the rotational speed being detected by the second rotational speed sensor, is lower than a second predetermined value, as the idling state.

[FIG. 1]

[FIG. 2]

[FIG. 3]

ENLARGED SECTIONAL VIEW
TAKEN ALONG LINE A-A

210, 211, 212, 2131, 2132, 230, 223, 2231, 222, 221, 220, 214

211, 212, 2131, 2132, 210, 213, A, 220, 224, 221, 222, 2231, 2232, 223

[FIG. 4]

~11

V_mu,V_mv,V_mw,  18a  THREE-PHASE/ TWO-PHASE CONVERTING SECTION

I_mu,I_mv,I_mw,  18b  THREE-PHASE/ TWO-PHASE CONVERTING SECTION

I_au,I_av,I_aw,  18c  THREE-PHASE/ TWO-PHASE CONVERTING SECTION

$V_{md}$
$V_{mq}$
$I_{md}$
$I_{mq}$
$I_{ad}$
$I_{aq}$

VOLTAGE COMMAND COMPENSATING SECTION  22

$\Delta V_{ad}{}^*$
$\Delta V_{aq}{}^*$

$V_{mDC}{}^*$
$V_{mDC}$
$V_{aDC}{}^*$
$V_{aDC}$
$\omega_m$
$A_a$
$A_b$

CURRENT COMMAND COMPUTING SECTION  19

$I_{ad}{}^*$
$I_{aq}{}^*$

21  VOLTAGE COMMAND COMPUTING SECTION

$V_{ad}{}^*$  $V_{ad}{}^{**}$
$V_{aq}{}^*$  $V_{aq}{}^{**}$

23  TURNS RATIO CONVERTING SECTION

$V_{ad}{}^{***}$
$V_{aq}{}^{***}$

25  TWO-PHASE/ THREE-PHASE CONVERTING SECTION

$V_{au}{}^*$
$V_{av}{}^*$
$V_{aw}{}^*$

26  CONTROL SIGNAL GENERATING SECTION

CONTROL SIGNAL

$\omega_{a\_grid}{}^*$
$\omega_{a\_gen}{}^*$
$\omega_{a\_mot}{}^*$
$\omega_{a\_pump}{}^*$

ACCESSORY DEMANDED ELECTRIC POWER ESTIMATING SECTION  24

$P_{a\_req}$

20  FREQUENCY COMMAND COMPUTING SECTION

$\omega_1{}^*$

$\omega_r$

EP 4 683 208 A1

[FIG. 5]

EP 4 683 208 A1

[FIG. 6]

20

$\omega_r$          +                  $\omega_1{}^*$

+

$\omega_s{}^*$     20a

SLIP FREQUENCY
COMMAND COMPUTING
SECTION

[FIG. 7]

[FIG. 8]

[FIG. 9]

$\omega_{a\_mot}^*$ → ELECTRIC POWER ESTIMATING SECTION FOR TRAVELLING MOTOR COOLING MOTOR — 24a — $P_{a\_mot\_reg}$

$\omega_{a\_grid}^*$ → ELECTRIC POWER ESTIMATING SECTION FOR REGENERATIVE DISCHARGING RESISTOR COOLING MOTOR — 24b — $P_{a\_grid\_reg}$

$\omega_{a\_pump}^*$ → ELECTRIC POWER ESTIMATING SECTION FOR PUMP MOTOR — 24c — $P_{a\_pump\_reg}$

$\omega_{a\_gen}^*$ → ELECTRIC POWER ESTIMATING SECTION FOR GENERATOR COOLING MOTOR — 24d — $P_{a\_gen\_reg}$

24

$P_{a\_reg}$

EP 4 683 208 A1

[FIG. 10]

# [FIG. 11]

(a) TRAVELLING MOTOR ROTATIONAL SPEED $\omega_m$

HIGHER / LOWER — TIME $\omega_{m\_th}$

(b) GENERATOR ROTATIONAL SPEED $\omega_r$

HIGHER / LOWER — TIME $\omega_{r\_th}$

(c) CURRENT COMMAND SWITCHING FLAG FL_Iad_ref

ON / OFF — TIME

(d) ACCESSORY SIDE DEMANDED ELECTRIC POWER $P_{a\_req}$

HIGHER / LOWER — TIME

(e) d-AXIS AUXILIARY WINDING CURRENT $I_{ad}$

HIGHER / LOWER — TIME
- - - COMPARATIVE EXAMPLE
——— PRESENT EMBODIMENT

(f) MAIN MACHINE SIDE DC VOLTAGE $V_{mDC}$

HIGHER / LOWER — TIME
- - - COMPARATIVE EXAMPLE
——— PRESENT EMBODIMENT

(g) ACCESSORY SIDE DC VOLTAGE $V_{aDC}$

HIGHER / LOWER — TIME
- - - COMPARATIVE EXAMPLE
——— PRESENT EMBODIMENT

$t_0$  $t_1 t_2$  TIME

EP 4 683 208 A1

## INTERNATIONAL SEARCH REPORT

| International application No. |
|---|
| **PCT/JP2023/044092** |

---

**A. CLASSIFICATION OF SUBJECT MATTER**

*H02P 9/04*(2006.01)i; *B60L 1/00*(2006.01)i; *B60L 7/14*(2006.01)i; *B60L 9/18*(2006.01)i; *B60L 50/10*(2019.01)i; *E02F 9/00*(2006.01)i

FI:    H02P9/04 J; B60L1/00 L; B60L7/14; B60L9/18 J; B60L50/10; E02F9/00 C

According to International Patent Classification (IPC) or to both national classification and IPC

---

**B. FIELDS SEARCHED**

Minimum documentation searched (classification system followed by classification symbols)

H02P9/04; B60L1/00; B60L7/14; B60L9/18; B60L50/10; E02F9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

---

**C. DOCUMENTS CONSIDERED TO BE RELEVANT**

| Category* | Citation of document, with indication, where appropriate, of the relevant passages | Relevant to claim No. |
|---|---|---|
| A | JP 2022-150448 A (HITACHI CONSTRUCTION MACHINERY CO., LTD.) 07 October 2022 (2022-10-07) entire text, all drawings | 1-3 |

---

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/044092**

| Patent document cited in search report | | | Publication date (day/month/year) | Patent family member(s) | | | Publication date (day/month/year) |
|---|---|---|---|---|---|---|---|
| JP | 2022-150448 | A | 07 October 2022 | CN | 116056938 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8289406 A